# EUROPEAN PATENT APPLICATION

(11) **EP 4 575 849 A1**
(43) Date of publication of application: **25.06.2025**
(21) Application number: 24221549.9
(22) Date of filing: 19.12.2024
(51) Int. Cl.: G06F 21/32, H04L 9/40, H04W 12/065

(54) **METHOD FOR MULTI-FACTOR USER AUTHENTICATION**

(30) Priority: 22.12.2023 FI 20236421
(71) Applicant: Nokia Technologies Oy, 02610 Espoo (FI)
(72) Inventor: MIN, Chulhong, Cambridge (GB); VASILE, Diana-Alexandra, Cambridge (GB); ORZIKULOVA, Adiba, Daejeon (KR)
(74) Representative: Nokia EPO representatives

(57) **Abstract**

A method for multi-factor user authentication, comprising, determining a plurality of candidate processes for the multi-factor user authentication, wherein a candidate process is using at least two authentication factors provided by one or more wearable devices, for one or more of the plurality candidate process, determining one or more performance scores respectively quantifying one or more properties that characterize how the method performs in executing said candidate process, determining a plurality of sets of the one or more candidate processes, wherein a specific set is adapted to execute one or more authentication requests, selecting one specific set among the plurality of sets based on the one or more performance scores, according to a selection rule that is based on a performance goal for the method, and executing the one or more authentication requests by performing the selected set.

## Description

### TECHNICAL FIELD

The present disclosure relates to the field of user authentication.

### BACKGROUND

User authentication plays an important role in many daily life scenarios requiring security for the purpose of identification and/or access control.

Recent developments in the mobile and Internet of Things (IoT) industry have led to a fast increase in the use of wearable smart devices, such as bracelets, watches, glasses, fitness trackers, shoes, rings, wireless earbuds, etc., that can sense, detect, or measure heart rate, steps/paces, voice, IMU sensor (inertial measurement unit) data, or other behavioral and/or biometric information. Such wearable devices allow to achieve an authentication that relies on unique biological characteristics of the user to verify his identity.

The present disclosure aims to improve efficiency of multi-factor authentication (MFA) for example in terms of resource usage, authentication accuracy and/or speed, and/or network usage. The MFA is an electronic authentication method in which a user is granted access to a service only after successfully presenting two or more pieces of evidence (or factors) to an authentication mechanism.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a computer-implemented method for multi-factor user authentication, comprises the steps of:
A- determining a plurality of candidate processes for the multi-factor user authentication, wherein a candidate process is using at least two authentication factors provided by one or more wearable devices;
B- for one or more of the plurality candidate processes, determining one or more performance scores respectively quantifying one or more properties that characterize how the method performs in executing said candidate process;
C- determining a plurality of sets of the one or more candidate processes, wherein a specific set is adapted to execute one or more authentication requests;
D- selecting one specific set among the plurality of sets based on the one or more performance scores, according to a selection rule that is based on a performance goal for the method;
E- executing the one or more authentication requests by performing the selected set.

The present method allows to dynamically determine the optimal wearable devices to be used to execute the authentication request(s) in order to achieve a performance goal.

In an embodiment, the method further comprises, for the one or more authentication requests:
- determining at least one requirement of the authentication request; and
- in the step C, filtering the plurality of candidate processes to obtain a subset of the plurality of candidate processes satisfying the at least one requirement of the authentication request.

In an embodiment, if a plurality of authentication requests are received, the step C may further comprise a step of combining a plurality of candidate processes respectively extracted from the plurality of subsets of the plurality of candidate processes obtained for the plurality of authentication requests.

For example, determining the at least one requirement of the authentication request can comprise determining at least one requirement of a group comprising one or more of:
- one or more wearable devices to be used to perform authentication;
- one or more authentication factors to be used to perform authentication;
- an information on authentication frequency; or
- an information on authentication accuracy.

In an embodiment, the one or more properties quantified by the one or more performance scores may comprise one or more of:
- an authentication accuracy;
- an authentication speed;
- a network usage to perform authentication;
- an energy efficiency of authentication;
- an energy balance between wearable devices to perform authentication; or
- a device wearing time.

For example, the selection rule can comprise one or more of:
- prioritizing accuracy of authentication;
- prioritizing speed of authentication;
- prioritizing low network usage of authentication;
- prioritizing energy efficiency of authentication;
- prioritizing energy balance of authentication between the wearable devices; or
- prioritizing authentication with devices that are expected to be worn longer.

In an embodiment, the method may comprise a step of selecting the selection rule among a plurality of predetermined selection rules.

For example, the selection rule can be selected based on one or more monitored conditions or states of the method.

Advantageously, the steps A to E are carried out by a master device.

In an embodiment, at least part of the steps A to E can be executed if there is a change in at least one or more of: the one or more authentication requests, the wearable devices or the selection rule.

According to a second aspect, an apparatus is configured to execute one or more of all steps of the method according to the first aspect. The apparatus may comprise means for performing one or more or all steps of the method according to the first aspect. The means may comprise at least one processor and at least one memory storing instructions that, when executed by the at least one processor, cause the apparatus to perform one or more or all steps of a method according to the first aspect. The means may comprise circuitry (e.g. processing circuitry) to perform one or more or all steps of a method according to the first aspect.

According to the second aspect, the apparatus can comprise:
- means for determining a plurality of candidate processes for the multi-factor user authentication, wherein a candidate process is using at least two authentication factors provided by one or more wearable devices;
- for one or more of the plurality candidate process, means for determining one or more performance scores respectively quantifying one or more properties that characterize how the method performs in executing said candidate process;
- means for determining a plurality of sets of the one or more candidate processes, wherein a specific set is adapted to execute one or more authentication requests;
- means for selecting one specific set among the plurality of sets based on the one or more performance scores, according to a selection rule that is based on a performance goal for the method;
- means for executing the one or more authentication requests by performing the selected set.

According to a third aspect, a system for multi-factor user authentication comprises:
- a plurality of wearable devices, wherein a wearable device is configured to provide at least one authentication factor;
- means adapted to perform the steps of the method according to the first aspect.

In an embodiment, the system may comprise a master device that is configured to perform the steps A to E of the method.

The master device can be one of the wearable devices or the master device can a device different from the wearable devices, to which the wearable devices are connected.

According to another aspect, a computer program comprises instructions to cause the apparatus according to the second aspect or the system according to the third aspect to execute the method according to the first aspect.

The instructions may cause the apparatus or system to perform one or more or all steps of a method according to the first aspect.

According to another aspect, a non-transitory computer readable medium comprises program instructions stored thereon for causing an apparatus or system to perform the method according to the first aspect.

The program instructions may cause the apparatus or system to perform one or more or all steps of a method according to the first aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 illustrates a system for multi-factor authentication, according to an example.
FIG. 2 is a flow diagram illustrating a method for multi-factor authentication according to an example.
FIG. 3 is a flowchart illustrating a step of the method of FIG. 2 according to an example.
FIG. 4 is a flowchart illustrating another step of the method of FIG. 2 according to an example.
FIG. 5 illustrates an apparatus configured to execute at least part of the steps of the method of figure 2, according to an embodiment.
FIG. 6 illustrates a pseudo-code algorithm for generation of candidate processes, according to an example.
FIG. 7 illustrates a pseudo-code algorithm for selection of an optimal set of candidate processes, according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and/or aspects that are relevant for a clear understanding of the present invention, while eliminating, for purposes of clarity, many other elements that may be well known in the art or not relevant for the understanding of the invention.

User authentication based on biometric data sensed or measured by wearable devices has multiple advantages. The authentication is robust. Biometric data is unique to each individual, making it difficult to forge or steal. It cannot be forgotten or lost, unlike passwords or PINs. Biometric authentication provides a quick and easy verification of the user's identity. Wearable devices including sensors to detect biometric data allow the user to authenticate in a transparent manner, without requiring any interaction between the user and the wearable device. This ease of use significantly improves the user experience. Furthermore, wearable devices can be used for continuous authentication, ensuring that the individual that is using the device is the legitimate user. Continuous authentication with wearable devices is more secure than traditional one-time authentication methods.

In a user device such as a smartphone for example, applications increasingly use data from multiple devices. Furthermore, more and more users are wearing multiple wearable devices. In this context, multi-device authentication offers a more robust authentication and ensures data authenticity and security. Multi-device authentication not only compensates for individual limitations of each wearable device but also ensures that data received from various devices is both authentic and secure.

However, combining multiple devices for authentication presents various issues arising from varied sensing capabilities and/or resource demands, a lack of coordination in processing multiple authentication requests, and failure to take real-time conditions into account. All this leads to inefficiencies in authentication processes such as overlapping authentications, excessive energy drains, failure to adapt the authentications to a device battery status and/or network strength for data transmission.

The present disclosure concerns a method 300 and system 100 for multi-factor user authentication, according to one or more example embodiments.

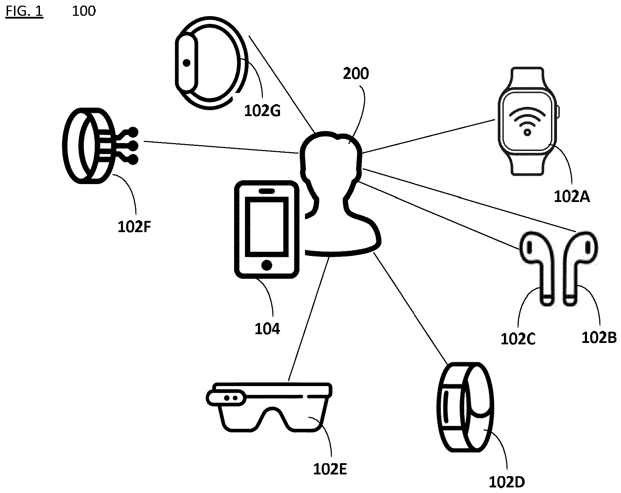

FIG. 1 shows a system 100 for authenticating a user 200 an/or a user device 104 (i.e., verifying the identity of the user 200 and/or the user device 104) via wearable devices 102 A-G in accordance with one or more embodiments of the present disclosure.

A wearable device 102 can comprise a computing device comprising a processor, a memory, and a communication module, that is configured to be worn by or attached to a user. The wearable device 102 can be implemented with hardware components and software components.

In an embodiment, the wearable device 102 may be worn on a part of the body of the user (e.g., on the wrist, around the neck, around the waist, on the chest, on a foot, etc.). In some cases, the wearable device 102 may be worn as an implant that may be introduced for example within the skin or under the skin of the user 200. Alternatively, it may be adhered or placed into contact with the skin of the user 200. Alternatively or additionally, the one or more wearable devices 102 A-G may be in close proximity to the user 200 on a user's wireless personal area network (WPANs) or a wireless body area network (WBAN).

The wearable device 102 may be a device having capability to operate in Internet of Things (IoT) network which is a scenario in which objects may be provided with the ability to transfer data over a network without requiring human-to-computer interaction.

As illustrative and non-limiting examples, the wearable devices 102 can comprise one or more of the following devices: smartwatch 102A, left earbud 102B, right earbud 102C, fitness tracker 102D, smart glasses 102E, smart ring 102F, smart bracelet 102G, smart belt, smart shoes, smart clothing, or smart necklace, or any combination thereof.

In an embodiment, a wearable device 102 may comprise one or more sensors. The sensors can comprise, but are not limited to, biometric sensors (e.g., heart rate, body temperature, blood pressure, etc.), motion sensors (e.g., Inertial Measurement Unit (IMU)), and/or any other type of sensor configured to sense and/or measure data specific to the user 200 wearing the wearable device 102. For example, the smartwatch 102A can comprise an IMU, the smart ring 102F can comprise different biometric sensors to measure heart rate, blood pressure, skin temperature, etc., the earbud can comprise a photoplethysmography (PPG) sensor, etc.

The wearable device 102 is configured, based on the one or more sensors, to provide at least one authentication factor that can be, for example, a heart rate information, a body temperature information, a user gait information, and/or any other user biometric, user behavioral or user context information sensed by the wearable device 102 (i.e., by the one or more sensors of the wearable device 102).

In an embodiment, the system 100 comprises a master device 104 configured to execute the steps of the method 300 for multi-factor authentication that will be described later, in accordance with one or more embodiments of the present disclosure. The master device 104 can comprise a computing device comprising at least one processor 1041, at least one communication module or device, and at least one memory 1042 for storing instructions which, when executed by the at least one processor, cause the master device 104 to carry out the method 300 for multi-factor authentication that will be described later in accordance with one or more embodiments. The master device 104 can be implemented with hardware components and software components.

The master device 104 may comprise one or more communication devices or modules to wirelessly communicate with the wearable devices 102, for example using Bluetooth^{®}, ZigBee^{®}, Matter, Thread, WLAN (wireless local area network), UWB (ultra-wide band), 3GPP (3rd Generation Partnership Project) Sidelink or any other wireless communication technique adapted to characteristics of communication with the wearable devices 102 like the range, transfer speed, power consumption, ...

The master device 104 may further comprise one or more communication devices or modules to communicate with another computing device (e.g., a server, a platform, another user device) or with a cloud system, through one or more communication network(s).

In an embodiment, the master device 104 can be a user device (also called UE, user equipment, user terminal, terminal device, etc.) like a portable computing device that comprises wireless mobile communication devices operating with or without a subscriber identification module (SIM). The master device 104 may comprise, but not limited to, the following types of devices: a mobile station (mobile phone), smartphone, personal digital assistant (PDA), handset, device using a wireless modem (alarm or measurement device, etc.), laptop, server, and/or touch screen computer, tablet, game console, notebook, multimedia device, or vehicle, or any combination thereof.

In an embodiment, the master device 104 may be one of the wearable devices 102.

In an embodiment, the master device 104 and/or one or more wearable devices 102 comprise one or more software components and/or applications and/or processes that may require the user 200 to authenticate.

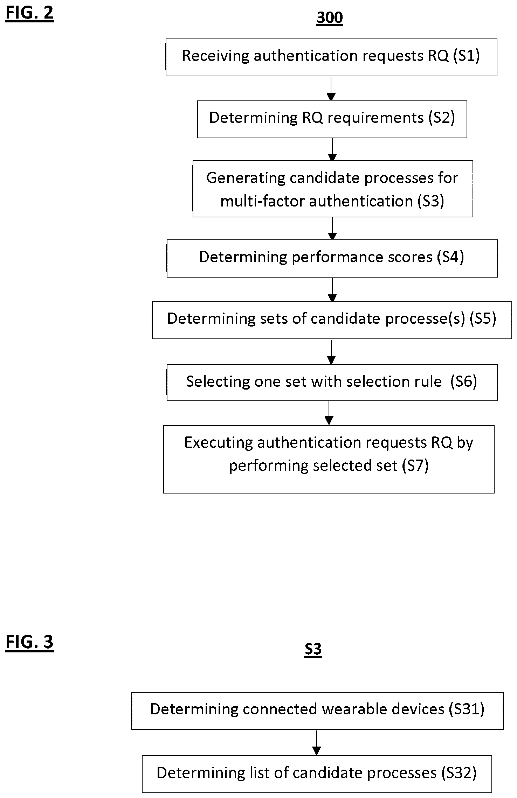

FIG. 2 shows a flowchart of a method 300 for multi-factor user authentication according to one or more example embodiments. The steps of the method 300 may be implemented by the master device 104 according to any example described herein. In that case, the master device 104 comprises means for executing the steps of the method 300 described below.

While the steps are described in a sequential manner, the person skilled in the art will appreciate that some steps may be omitted, combined, performed in different order and / or in parallel.

In an embodiment, the method 300 can comprise a step S1 of receiving N user authentication requests with N≥1. The authentication request(s) may be received from internal application(s) or process(es) running on the master device 104 and/or on wearable device(s) 102. Alternatively, or additionally, the authentication request(s) may be received from a requester that is external to the system 100, such as a remote service provider, through a communication network. The different authentication requests can be received by the master device 104 at different times or at the same time.

After receiving an authentication request, a step S2 of determining requirements of the authentication request is performed. The authentication request may comprise one or more requirements comprising for example:
- device-specific requirements, for example, specifying one or more specific wearable devices 102 that must be used to perform the multi-factor authentication, and
- authentication-specific requirements, for example, specifying one or more attributes or characteristics or parameters of the authentication, such as an authentication frequency and/or accuracy, which can be requested/determined by an entity that offers the service requesting authentication.

Regarding the device-specific requirements, the authentication request may, for example, specify one or more specific wearable devices 102 to perform the authentication. As an illustrative example, a health application may request that the user authentication should be executed via the smartwatch 102A and earbuds 102B, 102C to verify synchronized heartbeat and perform voice pattern analysis. In general, the user authentication executed via multiple devices 102, for example, the smartwatch 102A and earbuds 102B, 102C, can be used to verify any data, action and/or access.to a service/application.

Regarding the authentication-specific requirements, an application or service may, for example, need frequent and accurate user authentication. As an illustrative example, an application such as a bank application may require authenticating the user and/or the user's device 104 every 1 minute with the highest accuracy, or another application such as a game may require to authenticate the user every 5 minutes with moderate accuracy.

The method 300 further comprises a step S3 of determining or generating candidate processes for multi-factor user authentication. As illustrated in figure 3, in an embodiment, the step S3 can comprise an initial step S31 of determining the wearable devices 102, preferably all the wearable devices 102, that are connected to the master device 104. Then, in a step S32, the master device 104 determines a list of candidate processes for multi-factor user authentication, based on the connected wearable devices 102. Each or specific candidate process may comprise a combination of at least two authentication-factors provided by at least two different wearable devices 102, so as to provide a multi-device user authentication. In an embodiment, the step S32 may comprise the determination of all possible combinations of two or more authentication-factors provided by two or more wearable devices 102, using all the connected wearable devices 102 and all sensors available in specific wearable device 102. In one implementation, each or specific candidate process can use at least two device-sensor pairs, wherein a pair being composed of a wearable device 102 and a sensor of said wearable device 102 configured to provide one authentication factor. Various illustrative and non-limitative examples of candidate processes or systems are given below:
- (Smartwatch, heart rate sensor) + (Smart Ring, biometric sensor);
- (Smartwatch, IMU) + (Smart Ring, biometric sensor);
- (Smart Ring, biometric sensor) + (Left earbud, PPG sensor);
- (Smart Ring, biometric sensor) + (Right earbud, PPG sensor);
- (Smartwatch, heart rate sensor) + (Left earbud, PPG sensor);
- (Smartwatch, IMU) + (Left earbud, PPG sensor);
- (Smartwatch, heart rate sensor) + (Right earbud, PPG sensor);
- (Smartwatch, IMU) + (Right earbud, PPG sensor);
- (Smartwatch, heart rate sensor) + (Smart Ring, biometric sensor) + (Left earbud, PPG sensor).

In another implementation, the each or specific candidate processes may comprise a combination of at least two authentication-factors provided by one or more wearable devices 102. In some other implementation, also the master device 104 and its one or more sensors can provide to / participate in the candidate processes.

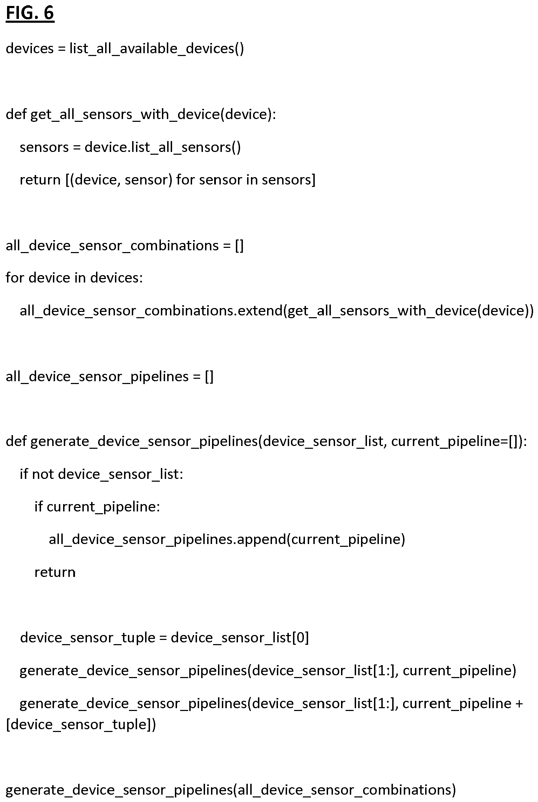

Figure 6 illustrates an example of a pseudo-code algorithm for the generation S3 of the candidate processes. In figure 6, a "pipeline" represents a candidate process.

In a step S4, the master device 104 determines, for each or specific candidate process, one or more performance scores respectively quantifying one or more properties that characterize how the method 300 performs in executing said candidate process for multi-factor user authentication, in other words how the system 100 operates and/or performs in executing said candidate process for multi-factor user authentication. The properties can for example comprise authentication accuracy, network usage, energy efficiency or cost, energy balance between devices, device wearing time, etc.

The authentication accuracy characterizes how accurate is the authentication. For example, the performance score of a candidate process in authentication accuracy can be determined for example based on the type of sensor data provided by said candidate process and, for example, by means of pretrained machine learning model(s). As an illustrative example, the PPG data provided by the candidate process allows to achieve a very high true positive rate (i.e., a correct positive authentication rate), for example higher than 95%. A higher authentication accuracy means a higher performance score.

The network usage characterizes the bandwidth usage of the network including the communication channels between the master device 104 and the wearable devices 102 (e.g., a user's wireless personal area network (WPANs), a wireless body area network (WBAN), a short range wireless local area network, a wireless mesh network, etc.) to perform authentication. For example, the performance score of a candidate process in network usage can be determined based on the amount of transmitted data and/or the data transmission frequency during authentication. The less network bandwidth the authentication uses, the higher the performance score.

The energy efficiency or cost characterizes how much energy is used to perform authentication. For example, the performance score of a candidate process in energy efficiency or cost can be determined based on predetermined energy footprints of the sensors and/or authentication algorithm(s) used by the candidate process. The lower the energy use or cost in the authentication process, the higher the performance score.

The energy balance between devices characterizes how energy consumption is balanced between the wearable devices 102 during authentication. For example, the performance score of a candidate process in energy balance can be determined based on predetermined energy footprints of the sensors and/or authentication algorithm(s) used by the candidate process. The lower the energy footprint, the higher the performance score.

The device wearing time characterizes the probability that the wearable devices 102 of the candidate process will be worn, in operating condition, during the entire authentication period, i.e., until the authentication achieved through said candidate process has successfully finished. For example, if one of the wearable devices 102 of the candidate process is usually taken off around dinner time for charging, then the candidate process determined in connection with an authentication request around that time has a lowered performance score because there is a risk that the wearable device 102 will be taken off during the authentication. In such a case, the authentication is interrupted and re-started, which will result in a waste of energy and resources. For example, the performance score of a candidate process in device wearing time can be determined based on historical data measuring when the user wears the wearable device(s) 102 of the candidate process. In some cases, the user may wear the wearable device 102 only when exercising (e.g., a fitness tracker is usually worn only during exercising) and/or the wearable device 102 is usually taken off during the day to charge, for example within a specific period of time during the day (e.g., during dinner time, after 10 pm, etc.). The longer and more frequently a device is used, the higher the performance score.

The determination of performance scores of the candidate processes in authentication accuracy, network usage, energy efficiency or cost, energy balance between devices, device wearing time and/or any other property characterizes how the method 300 or system 100 operates and/or performs in executing said candidate process for multi-factor user authentication by a scoring system of the master device 104. The scoring system can use pre-trained machine learning model(s) and/or other scoring algorithm(s). It can optionally be updated for example based on real-time feedback data and/or condition changes (e.g., conditions changes related to network usage, remaining energy, device wearing time, and/or any other parameter or data used in the determination of the performance scores) received or determined by the master device 104, and/or based on update instructions and data received from a remote server. The training data to train the machine learning model(s) can be collected by the system 100 and/or by a test system similar to the system 100.

The method 300 further comprises a step S5 of determining a plurality of sets of the one or more candidate processes, a specific set being adapted to execute the N received authentication requests. In other words, if a plurality of authentication requests have been received (N>1), a specific set is adapted to execute said plurality of authentication requests. If only one authentication request (N=1) has been received, a specific set is adapted to execute said authentication request.

The step S5 can further comprise, for each or specific authentication requests that has been received, a step of filtering the plurality of candidate processes to obtain a subset of candidate processes that satisfy the at least one requirement of said authentication request determined in the step S2.

If only one authentication request has been received, the set of candidate processes adapted to execute the authentication request may only comprise the subset of candidate processes.

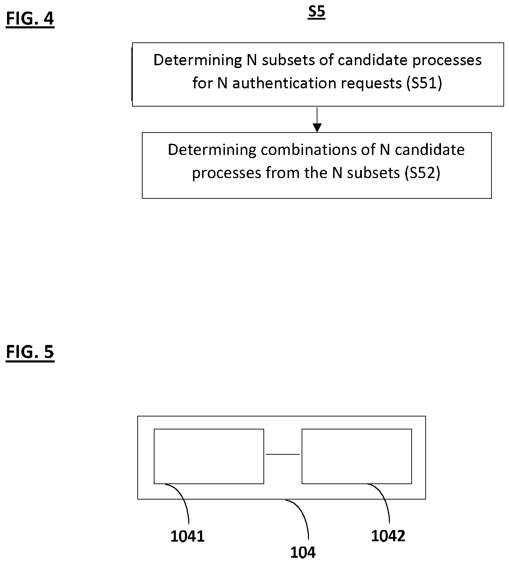

If a plurality of authentication requests have been received, the step S5 further comprises a step of combining a plurality of candidate processes respectively extracted from the plurality of subsets of candidate processes determined for N authentication requests. For example, as illustrated in figure 4, if there are N authentication requests RQ_1, RQ_2, ..., RQ_N, a first subset ofxi candidate processes is determined for the authentication request RQ_1, a second subset of xz candidate processes is determined for the authentication request RQ_2, ..., a N^{th} subset of x_{N} candidate processes is determined for the authentication request RQ_N, in the step S51, with x₁, x₂, ..., x_{N}≥1. Then, in the step S52, the master device 104 can determine all the combinations of N candidate processes respectively extracted from the N subsets, in order to determine sets of candidate processes that are adapted to execute the N authentication requests RQ_1, RQ_2, ..., RQ_N. As an illustrative example, let's consider that two authentication requests RQ_1 and RQ_2 have been received and must be handled. In the step S51, it may be determined that there are for example a subset of 5 candidate processes that can satisfy the requirements of the request RQ_1 and a subset of 7 candidate processes that can satisfy the requirements of the request RQ_2. In that case, in the step S52, it may be determined a number of 35 (7*5) sets or combinations of two candidate processes respectively extracted from the two subsets. Each of the 35 sets or combinations of two candidate processes is adapted to execute the two requests RQ_1 and RQ_2.

The method 300 further comprises a step S6 of selecting one set among the plurality of sets of one or more candidate processes, determined in the step S5, according to a selection rule or policy and based on the performance scores. The selection rule or policy for the system 100 can be based on or follows a performance goal for the system 100 or method 300. For example, the selection rule or policy for the system 100 can be one of the rules below:
- prioritizing accuracy of authentication;
- prioritizing speed or quickness of authentication;
- prioritizing low network usage of authentication;
- prioritizing energy cost or efficiency of authentication;
- prioritizing energy balance between the wearable devices 102 during authentication;
- prioritizing authentication with devices that are expected to be worn longer.

If the selection rule for the system 100 comprises prioritizing the accuracy of authentication, the master device 104 can determine a global performance score in authentication accuracy for each of the sets or the specific sets of one or more candidate processes determined in the step S5, based on the performance score in the authentication accuracy determined for said one or more candidates, and select the set having the highest score (or one of the sets with the highest score if they are more than one).

If the selection rule for the system 100 comprises prioritizing the quickness of authentication, the master device 104 can determine a global performance score in authentication speed for each of the sets or specific sets of one or more candidate processes determined in the step S5, based on the performance score in the authentication speed determined for said one or more candidate, and select the set having the highest score (or one of the sets with the highest score if they are more than one).

If the selection rule for the system 100 comprises prioritizing the low or limited network usage, the master device 104 can determine a global performance score in the network usage for each of the sets of one or more candidate processes determined in the step S5, based on the performance score in the limited network usage determined for said one or more candidate, and select the set having the highest score (or one of the sets with the highest score if they are more than one).

If the selection rule for the system 100 comprises prioritizing the energy cost or efficiency of authentication, the master device 104 can determine a global performance score in energy cost or energy efficiency for each of the sets of one or more candidate processes determined in the step S5, based on the performance score in the energy cost or efficiency of authentication determined for said one or more candidate processes, and select the set having the highest score (or one of the sets with the highest score if they are more than one).

If the selection rule for the system 100 comprises prioritizing the energy balance between the wearable devices 102 during authentication, the master device 104 can determine a global performance score in the energy balance between the devices for each of the sets of one or more candidate processes determined in the step S5, based on the performance score in the energy balance determined for said one or more candidate processes, and select the set having the highest score (or one of the sets with the highest score if they are more than one).

The selection rule or policy for the system 100 could comprise any other selection rule that is based on any type of performance goal for the system 100.

The selection rule or policy for the system 100 can be configured in the master device 104.

In an embodiment, the selection rule or policy can be set or selected among predetermined selection rules or policies by a user through a user interface of the master device 104.

Alternatively, or additionally, the selection rule or policy can be selected among predetermined selection rules or policies based one or more monitored conditions or states of the method 300 or system 100. The monitored condition(s) or state of the system 100 can comprise, but not limited to: battery level or status, reception of a new authentication request, number of authentication requests, removal of a wearable device 102, addition of a wearable device 102, significant change of resource availability in a wearable device 102 (e.g., the wearable device 102 is in power saving mode, the availability of its resources is reduced), network latency, geolocation of the system 100, etc. In that case, the selection of the selection rule or policy can be performed dynamically and/or in real time.

As previously indicated, a global performance score for a set of one or more candidate processes can be determined based on the performance scores of the one or more candidate processes, for example by adding, optionally with weights, and/or by averaging the performance scores of the one or more candidate processes.

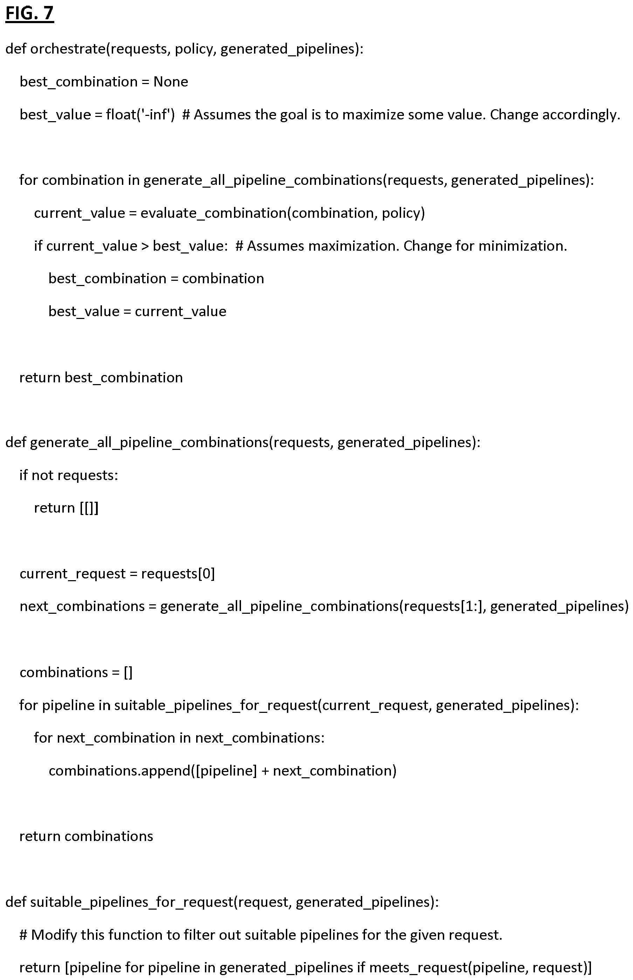

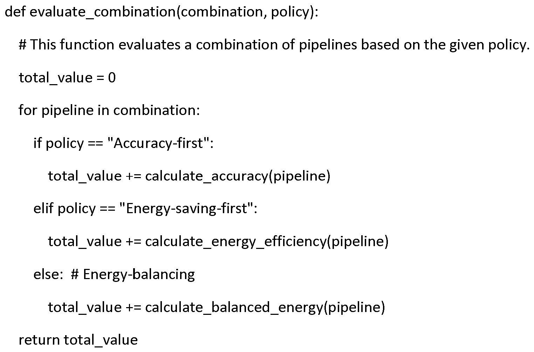

Figure 7 illustrates an example of a pseudo-code algorithm for the determination S5 of sets of candidate process(es) and the selection S6 of one set of candidate processes (the optimal set) with the selection rule. In figure 7, a "pipeline" represents a candidate process.

Finally, in a step S7, the N authentication requests are executed. In other words, the authentications requested by the N authentication requests are performed. For that purpose, the set of one or more candidate processes selected in the step S6 is executed. As a result, the one or more candidate processes for multi-factor authentication of the selected set is carried out by the master device 104 and the wearable devices 102 and sensors designated by said candidate process.

At least part of the steps of the method 300 previously described may be executed whenever there one or more changes in an authentication context, comprising one or more of: authentication requests, wearable devices 102, available sensor, and/or selection rules or policy. In other words, the at least part of the steps of the method 300 previously described may be executed when:
- a new authentication request is received;
- a wearable device 102 is removed or added to the system;
- the selection rule or policy is modified.

According to an example, if a wearable device 102 is removed due to a battery discharge, for example, the step S3 of determining or generating new candidate processes may be executed, which is followed by the determination of the performance scores of the new candidate processes (step S4), the determination of sets of one or more candidate processes (step S5), the selection of one set according to the selection rule for the system (step S6), and finally the execution of the authentication requests by performing the selected set of one or more candidate processes (step S7). According to another example, if the selection rule or policy for the system 100 changes, for example, due to low level battery status of one or more devices in the system 100, the step S6 of selecting a new set according to the new selection rule or policy may be performed, which is followed by the execution of the authentication requests by performing the newly selected set (step S7).

The present disclosure allows to centrally orchestrate the execution of the authentication requests, based on the specific characteristics and/or capacities of the wearable devices 102 and according to a policy that is aligned with a performance goal for the system 100. The orchestration coordinates the execution of the authentication requests across wearable devices 102. The method 300 dynamically determines how to execute the authentication requests by taking into account in real time any change in the authentication requests to handle, the wearable devices 102 and/or the policy or rule for selecting the set of one or more candidate processes for multi-factor authentication. Thus, an optimal strategy for multi-factor authentication is dynamically determined. For instance, in a situation where fast authentication is critical, the system 100 might prioritize a set of candidate processes including swift but energy-intensive wearable devices 102, while in a less time-sensitive situation, the system 100 might opt for a more energy-efficient set of candidate process(es).

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently or simultaneously. Also some steps may be omitted, combined or performed in different order. A process may be terminated when its steps are completed but may also have additional steps not disclosed in the figure or description.

Each described process, function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not comprised in a host device or host system configured to execute the instructions. The instructions may be transmitted over the computer-readable medium and be loaded onto the host device or host system. The instructions are configured to cause the host device or host system to perform one or more functions disclosed herein. For example, as mentioned above, at least one memory may comprise or store instructions, the at least one memory and the instructions may be configured to, with at least one processor, cause the host device or host system to perform the one or more functions.

The instructions may correspond to program instructions or computer program code. The instructions may comprise one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly comprise one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may comprise one or more storage device like a permanent mass storage device, magnetic storage medium, optical storage medium, digital storage disc (CD-ROM, DVD, Blue Ray, etc.), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

As illustrated in figure 5, the means may comprise at least one processor 1041 and at least one memory 1042 including at least one memory storing instructions that, when executed by the at least one processor, cause the apparatus 104 to the considered function(s). The means may comprise circuitry (e.g. processing circuitry) configured to perform the considered function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or comprise, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," comprises any and all combinations of one or more of the associated listed items.

The terminology used herein is for the purpose of describing particular embodiments only and is not intended to be limiting. As used herein, the singular forms "a," "an," and "the," are intended to comprise the plural forms as well, unless the context clearly indicates otherwise. It will be further understood that the terms "comprises," "comprising," "comprises," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

## Claims

1. A computer-implemented method, comprising the steps of:
A- determining (S3) a plurality of candidate processes for a multi-factor user authentication,
wherein a candidate process is using at least two authentication factors provided by one or
more wearable devices (102);
B- for one or more of the plurality candidate processes, determining (S4) one or more performance scores respectively quantifying one or more properties that characterize how the method performs in executing said candidate process;
C- determining (S5) a plurality of sets of the one or more candidate processes, wherein a specific set is adapted to execute one or more authentication requests;
D- selecting (S6) one specific set among the plurality of sets based on the one or more performance scores, according to a selection rule that is based on a performance goal for the method; and
E- executing the one or more authentication requests by performing the selected set.

2. The method according to claim 1, further comprising, for the one or more authentication requests:
- determining (S2) at least one requirement of the authentication request; and
- in the step C- (S5), filtering (S51) the plurality of candidate processes to obtain a subset of the plurality of candidate processes satisfying the at least one requirement of the authentication request.

3. The method according to claim 2, wherein, if a plurality of authentication requests are received, the step C- (S5) further comprises a step of combining (S52) a plurality of candidate processes respectively extracted from the plurality of subsets of the plurality of candidate processes obtained for the plurality of authentication requests.

4. The method according to claim 2 or 3, wherein determining (S2) the at least one requirement of the authentication request comprises determining at least one requirement of a group comprising at least one of:
- one or more wearable devices to be used to perform authentication;
- one or more authentication factors to be used to perform authentication;
- an information on authentication frequency; or
- an information on authentication accuracy.

5. The method according to any of claims 1 to 4, wherein the one or more properties quantified by the one or more performance scores comprise at least one of:
- an authentication accuracy;
- an authentication speed;
- a network usage to perform authentication;
- an energy efficiency of authentication;
- an energy balance between wearable devices to perform authentication; or
- a device wearing time.

6. The method according to any of claims 1 to 5, wherein the selection rule comprises at least one of:
- prioritizing accuracy of authentication;
- prioritizing speed of authentication;
- prioritizing low network usage of authentication;
- prioritizing energy efficiency of authentication;
- prioritizing energy balance of authentication between the wearable devices; or
- prioritizing authentication with devices that are expected to be worn longer.

7. The method according to any of claims 1 to 6, further comprising a step of selecting the selection rule among a plurality of predetermined selection rules.

8. The method according to claim 7, wherein the selection rule is selected based on one or more monitored conditions or states of the method.

9. The method according to any of claims 1 to 8, wherein the steps A to E are carried out by a master device.

10. The method according to any of claim 1 to 9, wherein at least part of the steps A to E are executed if there is a change in at least one or more of: the one or more authentication requests, the wearable devices or the selection rule.

11. An apparatus (104), comprising:
- means for determining a plurality of candidate processes for the multi-factor user authentication, wherein a candidate process is using at least two authentication factors provided by one or more wearable devices;
- for one or more of the plurality candidate processes, means for determining one or more performance scores respectively quantifying one or more properties that characterize how the method performs in executing said candidate process;
- means for determining a plurality of sets of the one or more candidate processes, wherein a specific set is adapted to execute one or more authentication requests;
- means for selecting one specific set among the plurality of sets based on the one or more performance scores, according to a selection rule that is based on a performance goal for the method;
- means for executing the one or more authentication requests by performing the selected set.

12. System for multi-factor user authentication comprising:
- a plurality of wearable devices (102), wherein a wearable device (102) is configured to provide at least one authentication factor;
- means adapted to perform the steps of the method according to any of claims 1 to 10.

13. The system according to claim 12, comprising a master device (104) that is configured to perform the steps A to E of the method.

14. The system according to claim 13, wherein the master device (104) is one of the wearable devices (102) or the master device (104) is a device different from the wearable devices (102), to which the wearable devices (102) are connected.

15. A computer program comprising instructions to cause the system of any of claims 12 to 14 to execute the method according to any of claims 1 to 10.
